(19) Europäisches Patentamt / European Patent Office / Office européen des brevets

(11) **EP 2 831 895 B1**

(12) **EUROPEAN PATENT SPECIFICATION**

(45) Date of publication and mention
of the grant of the patent:
**27.06.2018 Bulletin 2018/26**

(51) Int Cl.:
***H01G 4/10*** *(2006.01)*      ***H01G 4/12*** *(2006.01)*

(21) Application number: **13721022.5**

(22) Date of filing: **28.03.2013**

(86) International application number:
**PCT/GB2013/050822**

(87) International publication number:
**WO 2013/144637 (03.10.2013 Gazette 2013/40)**

(54) **HIGH ENERGY DENSITY CAPACITOR AND DIELECTRIC MATERIAL THEREFOR**

KONDENSATOR MIT HOHER ENERGIEDICHTE UND DIELEKTRISCHES MATERIAL DAFÜR

CONDENSATEUR A HAUTE DENSITE D'ENERGIE ET MATERIAU DIELECTRIQUE POUR CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2012 GB 201205727**

(43) Date of publication of application:
**04.02.2015 Bulletin 2015/06**

(73) Proprietor: **The Secretary of State for Business
Innovation
& Skills
London
SW1H 0ET (GB)**

(72) Inventors:
• **PEREIRA CORREIA, Tatiana Maria**
**Greater London SW1 0ET (GB)**
• **WEAVER, Paul Michael**
**Greater London SW1 0ET (GB)**

(74) Representative: **Williams Powell
11 Staple Inn
London WC1V 7QH (GB)**

(56) References cited:
**EP-A1- 1 591 568      WO-A1-2008/118422
JP-A- 2009 231 482      US-A1- 2005 188 916**

• YI YU ET AL: "Microstructural Characterization of La- and Ti-Codoped Multiferroic BiFeO $_{3}$ Epitaxial Thin Films", IEEE TRANSACTIONS ON MAGNETICS, IEEE SERVICE CENTER, NEW YORK, NY, US, vol. 47, no. 10, 1 October 2011 (2011-10-01), pages 3780-3782, XP011384034, ISSN: 0018-9464, DOI: 10.1109/TMAG.2011.2150204
• SINGH P ET AL: "Magnetic and ferroelectric properties of epitaxial Sr-doped BiFeO3 thin films", SOLID STATE COMMUNICATIONS, PERGAMON, GB, vol. 150, no. 9-10, 1 March 2010 (2010-03-01), pages 431-434, XP026893422, ISSN: 0038-1098, DOI: 10.1016/J.SSC.2009.12.006 [retrieved on 2009-12-11]
• MURARI N ET AL: "Structural, electrical, and magnetic properties of chemical solution deposited BiFe1â xTixO3 and BiFe0.9Ti0.05Co0.05O3 thin films", JOURNAL OF APPLIED PHYSICS, AMERICAN INSTITUTE OF PHYSICS. NEW YORK, US, vol. 106, no. 1, 7 July 2009 (2009-07-07), pages 14103-14103, XP012123450, ISSN: 0021-8979, DOI: 10.1063/1.3158556

**Description**

The present invention relates to a capacitor and to a dielectric material therefor, particularly to a high energy density capacitor.

There is an increasing need for high capacity capacitors to satisfy the power requirements of numerous devices. There is a particular need for capacitors having a high energy density for efficiency in terms of size and weight. Moreover, in an increasing number of applications there is the need to have capacitors which are physically and electrically stable and able to withstand a wide range of operating temperatures.

The ability of a dielectric material to store energy is a function of how the material behaves in an electrical field. A material with a high saturation polarization (that is, the maximum polarisation of the material when an electrical field is applied) and low remnant polarization (that is, the remaining polarisation of the material when the electrical field is removed) is able to store more charge per unit volume than a material with a lower saturation polarization and/or higher remnant polarization.

In recent years various new families of capacitors have emerged, including X7R and X8R capacitors. These are a significant improvement over earlier types of capacitors in having higher energy densities and being operable at temperatures of up to around 125 to 150 degrees Centigrade respectively. Attempts have also been made to devise X9R capacitors, having an operating range up to around 200 degrees Centigrade. However, it is difficult to make such capacitors physically stable and thus suitable for various commercial applications including, for example, in vehicles and the like.

To achieve high energy density, oxide film or ceramic capacitors have been proposed, but these tend to require the use of lead based materials which are damaging to the environment and therefore not preferred. Furthermore, the energy storage characteristics of such capacitors are strongly temperature dependent.

A number of prior art documents disclose bismuth ferrite ("BFO") doped with various additives. Z. V. Gabbasova et al., PHYSICS LETTERS A, NORTH-HOLLAND PUBLISHING CO., 1991, Vol. 158, No. 9, pages 491-498 discloses various magnetoelectric properties of lanthanum-doped BFO but does not deal with energy density or energy storage application.

Similarly, F. Yan et al., SCRIPTA MATERIALIA, ELSEVIER, 2010, Vol. 63, No. 7, pages 780-783 discloses various magnetoelectric and ferroelectric properties of lanthanum-doped BFO but does not mention energy storage applications.

Another lanthanum-doped BFO is disclosed in US2007/029593 A1.

P. Singh et al., SOLID STATE COMMUNICATIONS, PERGAMON, 2010, Vol. 150, No.9-10, pages 431-434 discloses a strontium-doped BFO and reports its magnetoelectric and ferroelectric properties. Energy storage applications are not disclosed.

N. Murari et al., JOURNAL OF APPLIED PHYSICS, AMERICAN INSTITUTE OF PHYSICS, 2009, Vol. 106, No. 1, pages 14103 to 14103-5 discloses titanium-doped BFO and reports various magnetoelectric and ferroelectric properties, but not energy storage applications.

Another paper reporting the magneto electric and ferro electric properties of titanium and lanthanum-doped BFO is Y. Yu et al., IEEE TRANSACTIONS ON MAGNETICS, IEEE SERVICE CENTER, 2011, Vol. 47, No. 10, pages 3780-3782. Again, energy storage applications are not reported.

Examples of prior art capacitors can be found in JP 2009 231482 A , EP 1 591 568 A1, US-2009/0207551, CN-102199035 and CN-100591642.

The present invention seeks to provide an improved capacitor and dielectric material for a capacitor.

According to an aspect of the present invention, there is provided a capacitor including first and second conductive plates separated by a dielectric spacer, the dielectric spacer being formed of a dielectric material including a composition of bismuth ferrite and an additive which increases the difference between the saturation polarisation and the remnant polarisation of bismuth ferrite, characterised in that said additive preferably includes strontium and titanium.

The strontium and titanium may be added in any suitable form, either singly or together and either in elemental form or in the form of a compound. In a preferred embodiment, the strontium and titanium are added to bismuth ferrite in the form of strontium titanate in order to result in the dielectric material.

The proportions of strontium and titanium and bismuth and iron in the dielectric material may vary. In a preferred embodiment, the dielectric material is represented by the oxide of

$$z(Bi_xSr_{1-x})\text{-}(1-z)(Fe_yTi_{1-y})$$

with 0.1<x,y<0.8 and 0.2<z<0.8 And in a particularly preferred embodiment by the formula:

$$z(Bi_xSr_{1-x})(1-z)(Fe_yTi_{1-y})O_3$$

with x=0.2 and y=0.4 and z=0.5

It is surprising that a dielectric material with a high energy capacity can be formed from bismuth ferrite. This is because bismuth ferrite is a conductive material (specifically, conductive of DC electricity), and conductive materials do not normally lend themselves to energy storage because the energy tends to be lost before discharging. Bismuth ferrite also has a relatively high remnant polarisation, which makes it unsuitable for energy storage. It also exhibits dielectric losses. Thus, bismuth ferrite has tended to be used in applications which rely on its response to a magnetic field (such as use in magnetic sensors and ferromagnetic RAMs) rather than in energy storage applications.

Surprisingly, it has been found that doping bismuth ferrite with strontium and titanium has the effect of reducing its remnant polarisation and therefore increasing the difference between the saturation polarisation and the remnant polarisation which increases its energy storage capacity.

According to another aspect of the present invention, there is provided use of a composition of bismuth ferrite and additive which increases the difference between the saturation polarisation and the remnant polarisation of bismuth ferrite as a dielectric material for a capacitor.

According to another aspect of the present invention, there is provided a dielectric material for a capacitor including a composition of bismuth ferrite and additive which increases the difference between the saturation polarisation and the remnant polarisation of bismuth ferrite.

The inventors have discovered that bismuth and iron, or bismuth ferrite, when doped to reduce its natural remnant polarisation and its leakage, can act as a high density dielectric material with good temperature stability. Moreover, it is not necessary to use lead as an additive. The material can thus be used in a high energy density capacitor, with the ability to be able to store high levels of charge within relatively small volumes.

The material and capacitors made therefrom can be used for a variety of applications including, for example, power systems for vehicles including to provide pulse power and in regenerative braking systems, in high temperature electronics including for sensors, distributed controls and electronics systems, power conversion systems and so on. As a result of this stability and high energy density, the capacitor can be used in a variety of demanding applications including for instance in the aerospace industry, in oil and other fuel exploration and production, water and gas treatment, turbine engines, and a multitude of others.

Advantageously, the composition is in the form of a solid solution.

In a particularly preferred embodiment, the additive includes strontium and titanium. In another embodiment, the additive includes samarium; while in another embodiment the additive includes lanthanum.

It is to be understood that the material disclosed and claimed herein in its various embodiments could include other additives, for instance for manufacturing and processing purposes. Those additives will be provided to confer on the material other characteristics to the material, for example increased workability, but will not materially affect its capacitive properties.

It is also to be understood that the material disclosed and claimed herein in its various embodiments could be used as the energy storage component in, for example, a core-shell, multiphase or multilayer structure. The material and capacitor made with the material could be used in/as capacitors in drivers for LED lighting.

Embodiments of the present invention are described below, by way of example only, with reference to the accompanying drawings, in which:

Figure 1 is a schematic diagram of an example of capacitor;

Figure 2a is a graph representing saturation and remnant polarisation of bismuth ferrite;

Figure 2b is a schematic graph representing saturation and remnant polarisation of strontium titanate;

Figure 2c is a schematic graph representing saturation and remnant polarisation of bismuth ferrite when doped with strontium titanate;

Figure 3 is a graph showing the temperature characteristics of a composition of bismuth ferrite doped with strontium titanate compared to current capacitor structures;

Figure 4 is a graph of energy density of bismuth ferrite doped with strontium titanate compared to a typical X7R capacitor;

Figure 5 is a graph showing temperature dependence of relative permittivity and dielectric loss measured at various frequencies for bismuth ferrite doped with strontium titanate;

Figure 6 is a graph showing a P-E loop measured in bismuth ferrite doped with strontium titanate thin film at room temperature and at 1 kHz;

Figure 7 is a graph showing recoverable energy density *U* as a function of *E* (calculated from polarizing and depolarizing *P-E* data (*E*>0) in Figure 6); and

Figure 8 is a graph showing energy density *U* as a function of *E* measured and extrapolated for bismuth ferrite doped with strontium titanate thin film and other ferroelectric and antiferroelectric thin and thick films near breakdown field.

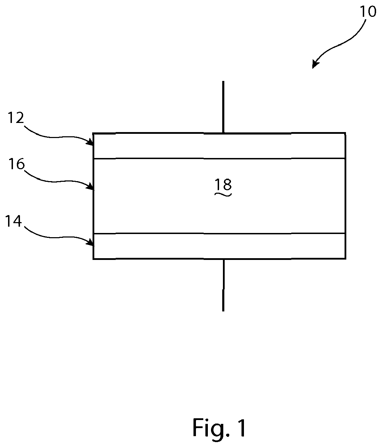

Referring to Figure 1, there is shown a schematic view of a simple capacitor 10, which includes first and second electrode plates 12, 14, typically made of a metal or metal alloy and spaced from one another by a substantially even and uniform spacing 16. In the space 16 between the plates 12, 14, there is provided a dielectric spacer 18, which may be a single layer or may include a number of layers. The primary component of the dielectric spacer 18 is a dielectric material able to store charge from current supplied to the capacitor. The dielectric material is therefore responsible for the storage capacity of the capacitor 10.

It is to be understood that Figure 1 shows a capacitor in its simplest form and that the teachings herein are equally applicable to all forms and design of capacitor, including capacitors with shaped electrode plates, with more than two electrode plates and with a plurality of spacer layers, that is a multi-layered capacitor

It is important that the dielectric material exhibits low charge loss and is stable over the expected operating temperatures of the capacitor. The capacitor as a whole should preferably also be physically stable, that is able to withstand the physical conditions to which it is subjected. While in delicate electronic or computer systems the capacitor may never be subjected to severe conditions, this is not the case in many other applications such as automotive and aerospace environments and many industrial environments. Furthermore, it is preferred that the material is lead free for environmental reasons.

The inventors have discovered that the oxide of bismuth and iron, or bismuth ferrite, can when suitably doped act as a high energy density dielectric material which exhibits good temperature stability, has high relative permittivity, low leakage and is physically stable. Bismuth ferrite has previously attracted interest for the combination of both electrical polarisation and magnetic properties in the same material. This is unusual and has potential applications such as magnetic field sensors. However, bismuth ferrite has not previously been recognised for its potential energy density or as a temperature stable capacitor. To achieve high energy density it is necessary to have a high breakdown strength and high polarisation. Bismuth ferrite *per se* has these attributes but also has a high remnant polarisation which reduces the energy density. Bismuth ferrite also has high leakage, therefore making it unsuitable as a capacitive material.

The inventors have discovered that it is possible to reduce or substantially eliminate the remnant polarisation as well as the leakage of conventional bismuth ferrite by a suitable additive. They have also discovered that in doing so it is possible to create a dielectric material which has high energy density. The preferred additives have low or zero remnant polarisation and low leakage. Leakage can be reduced further by making the compound bismuth deficient compared to simple bismuth ferrite compositions. As bismuth ferrite has a high Curie temperature, it makes the material temperature stable over a large range of operating temperatures and thus suitable for many different applications.

For the high energy density applications contemplated herein, the characteristic maximum field-induced polarisation (i.e. saturation polarisation) and the remainder polarization without an electric field (i.e. remnant polarisation) of the doped bismuth ferrite material are required.

Described below are a variety of suitable additives, including strontium titanate, samarium and lanthanum.

The preferred embodiments produce a solid solution of the bismuth ferrite with the additive and in this regard it is to be understood that although reference is made to bismuth ferrite, the material is more akin to a solid solution of the oxides of bismuth, iron and the additive elements. It is believed that it is the integration of the additive with the bismuth and iron elements which achieves the high energy density, low leakage and temperature stability of the material. It is therefore to be understood that references to bismuth ferrite herein encompasses the elements in solid solution form.

Example 1

Bismuth ferrite was doped with strontium titanate, which has only moderate maximum polarisation, but low remnant polarisation and low leakage. The combination of these two materials was proposed so as to provide a material more suitable for high energy density storage. Moreover, we have found that bismuth deficient forms of this composition provide superior low leakage characteristics.

## Experimental Method

### Film Preparation

A ceramic target with composition $(BiFeO_3)_{0.4}$-$(SrTiO_3)_{0.6}$ was processed by solid state reaction with $Bi_2O_2$, $Fe_2O_3$ and $SrTiO_3$ as starting powders. The powders were milled and calcined at 700 °C. The calcined powder was uniaxially pressed and further sintered at 1100 °C for 30 min in air furnace. BFST thin film was prepared onto a $SrRuO_3$(50 nm) electroded (100)-$SrTiO_3$ substrate by Pulsed Laser Deposition (PLD) method and using a KrF excimer laser ($\lambda$=248 nm) operated with pulse repetition rate of 10 Hz. After being deposited at 650 °C and under 0.027 mbar $O_2$ pressure, the film was post-annealed at 450 °C for 30 minutes under 800 mbar $O_2$. The stoichiometry $(BiFeO_3)_{0.4}$-$(SrTiO_3)_{0.6}$ was targeted, however EDX results suggested that the resulting thin film was bismuth deficient and strontium rich than the nominal composition. Circular top electrodes of Platinum (500 $\mu$m diameter) were evaporated through a patterned mask.

### Electrical characterization

Permittivity and dielectric losses measurements were performed using an impedance analyzer (Agilent 4294 A, Precision Impedance Analyzer), attached to a probe station (Suss MicroTec - ProbeShield PM8). A hotplate was used for temperature control (att Systems - A200). *P-E* loops were acquired by means of a Radiant Technologies RT66A ferroelectric tester at 1 kHz.

### Results and discussion

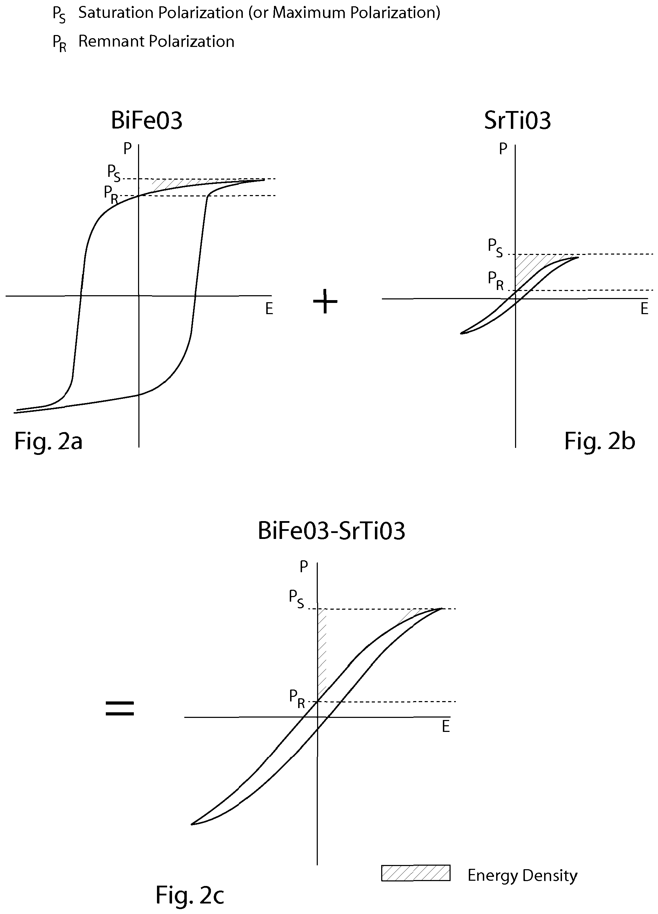

With reference to Figure 2a, this is a schematic graph of the polarisation characteristics of bismuth ferrite (showing polarisation P on the y-axis and electric field E on the x-axis). As can be seen, this exhibits a high saturation polarisation but also a high remnant polarisation. As a result, bismuth ferrite perse is not suitable as a capacitive material as it has a low energy density (the shaded area of the graph).

With reference to Figure 2b, this is a schematic graph of the polarisation characteristics of strontium titanate. As can be seen, this exhibits a low saturation polarisation but also a low or virtually zero remnant polarisation.

When bismuth ferrite is doped with strontium titanate, the resultant polarisation characteristics are as shown in Figure 2c. The additive has the effect of reducing the remnant polarisation of bismuth ferrite without any appreciable loss of its saturation polarisation, with the result that the material exhibits a high energy density (the shaded area of the graph).

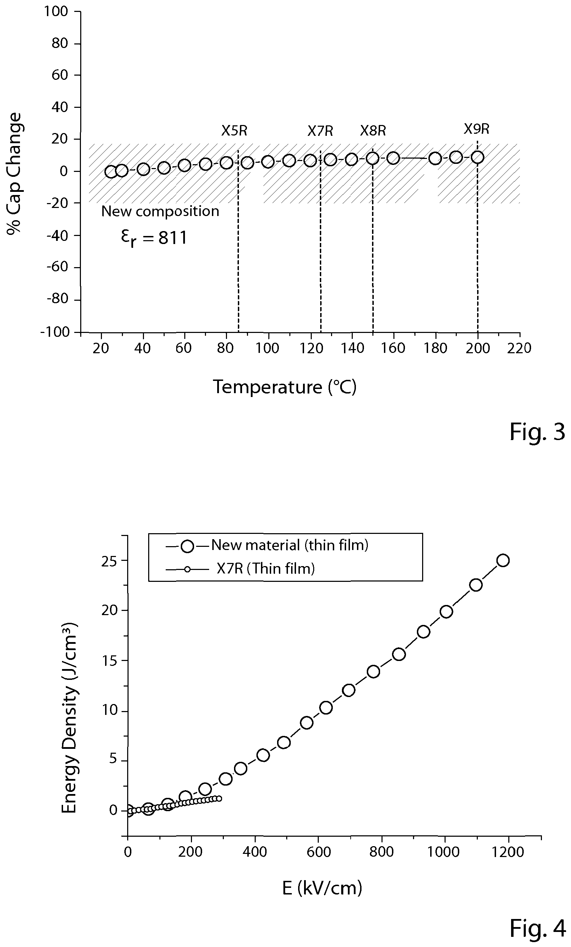

A capacitor was fabricated with a thin film dielectric spacer made from strontium titanate doped bismuth ferrite and then tested. The results of those tests are shown in Figures 3 and 4.

With reference to Figure 3 first, the performance of the capacitor with the new material is shown in the graph by the dots 20, whereas the performance of conventional and theoretical ceramic capacitors falls within the shaded area 22.

The nomenclature used to denote the performance of comparison capacitor, that is X5R, X7R, X8R and X9R is as per the EIA coding. An X5R capacitor has a low end operating temperature of -55 degrees Centigrade and a high end operating temperature of +85 degrees Centigrade, with a percentage change in capacitance over this range of $\pm$ 15%. An X9R, of which the applicant is not aware of any currently on the market, would have a low end operating temperature of -55 degrees Centigrade, a high end operating temperature of +200 degrees Centigrade, and a percentage change in capacitance over this range of $\pm$ 15%.

By contrast, a capacitor made with strontium titanate doped bismuth ferrite with a deficiency of bismuth exhibited a capacitance change of only 9% over a range from 25 to 200 degrees Centigrade with no signs of instability even at 200 degrees Centigrade. The capacitor could therefore be stable up to much higher temperatures.

Furthermore, the material exhibited a much higher relative permittivity (of around 811) compared to an X7R-based thin film capacitor, which is typically around 200. It is expected that a capacitor based on the new material in bulk form rather than applied as a thin film will have an even higher relatively permittivity.

With reference to Figure 4, this is a graph of energy density over dielectric strength for a thin film X7R capacitor compared to a thin film capacitor made from strontium titanate doped bismuth ferrite. As can be seen, the new capacitor has a much greater energy density.

### High Temperature Stability

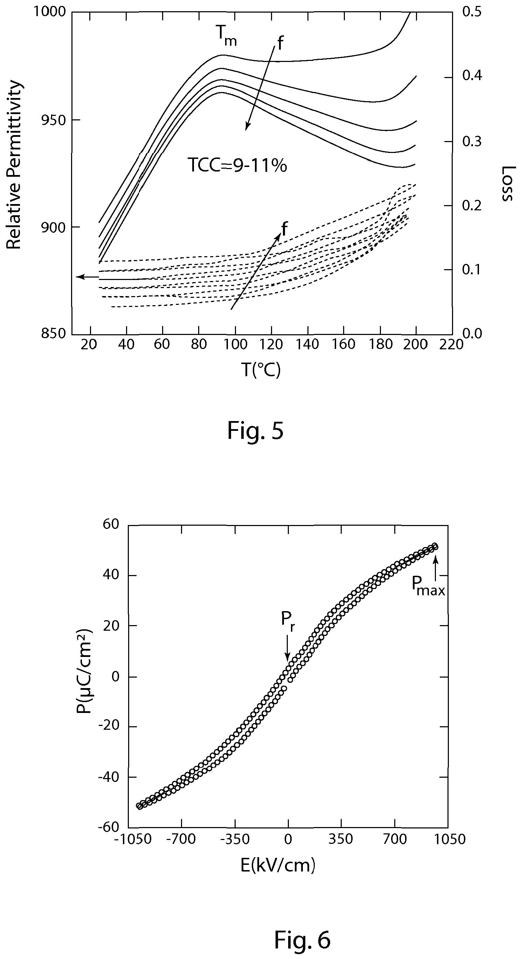

Figure 5 shows the temperature dependence of the relative permittivity and dielectric loss measured in a strontium titanate doped bismuth ferrite ("BFST") thin film (of thickness 400 nm) for various frequencies, specifically 10-30 kHz (increasing frequency is indicated by the arrow marked f) and at $V_{ac}$=0.5 V. The relative permittivity ranged from 800 (400 kHz) to a maximum of 1100 (25 kHz) at $T_m$=90 °C and showed frequency dispersion, which suggest that a diffuse relaxation mechanism takes place. In our thin film, and within the measured temperature range, we observed a single permittivity maximum at a lower temperature ∼ 90 °C characterized by frequency dispersion.

An important observation given by Figure 5, is that the permittivity of the BFST thin film remains within the 9-11 % of its room temperature value up to 200 °C. With a temperature coefficient of capacitance, *TCC,* of 9-11%, BFST thin film potentially places itself in an advantageous position compared to currently available commercial devices. The X*N*R capacitors (*N*=6, 7, 8,) temperature rating of capacitors specifies a maximum deviation of 15% from room temperature value at the rated temperature. X7R rated capacitors are widely available and maintain their capacitance to within 15% of room temperature value up to 125 °C. X8R capacitors maintain their capacitance to within15% up to 150 °C and are available as a speciality product from Syfer Technology Ltd, UK. X9R capacitors (15% up to 200 °C) are not commercially available. Ceramic capacitors with operating temperatures up to 200 °C are available but suffer a large diminution (65%) of capacitance at the upper temperature limit. This presents a serious limitation on the use of ceramic capacitors for high temperature applications such as operating high temperature power conversion electronics. We believe that our BFST thin film is a promising capacitor candidate for high temperature applications, as demanded by industries including low carbon vehicles, renewable energies, integrated circuits, and high temperature environments associated with aerospace applications, for example.

Energy Density and Efficiency

Figure 6 shows a slim and partially-saturated *P-E* loop obtained in BFST thin film at room temperature. $P_{max}$ is maximum polarization and $P_r$ is remnant polarization. As shown, the BFST thin film is characterized by high maximum polarization $P_{max}$ (52$\mu$C/cm$^2$) and low remnant polarization $P_r$ (3 $\mu$C/cm$^2$), while an electric field of 972 kV/cm is applied. From a technological perspective, the energy storage performance of a capacitor is based on the amount of energy (and power) it can release within the application constraints (e.g. rated voltage, operating temperature). Ferroelectric materials typically display hysteretic *P-E* loops where the charging (*E* increasing) and discharging (*E* decreasing) paths are not coincident (see Figure 6). The area of the loop represents an energy loss so that the energy delivered to the capacitor is larger than the energy that can be recovered. Therefore, recoverable energy density, during discharging, and efficiency

$$\eta \ \left(\eta = \frac{U_{recoverable}}{U_{delivered}} \times 100\right),$$

are important metrics to benchmark dielectrics for use in energy storage devices.

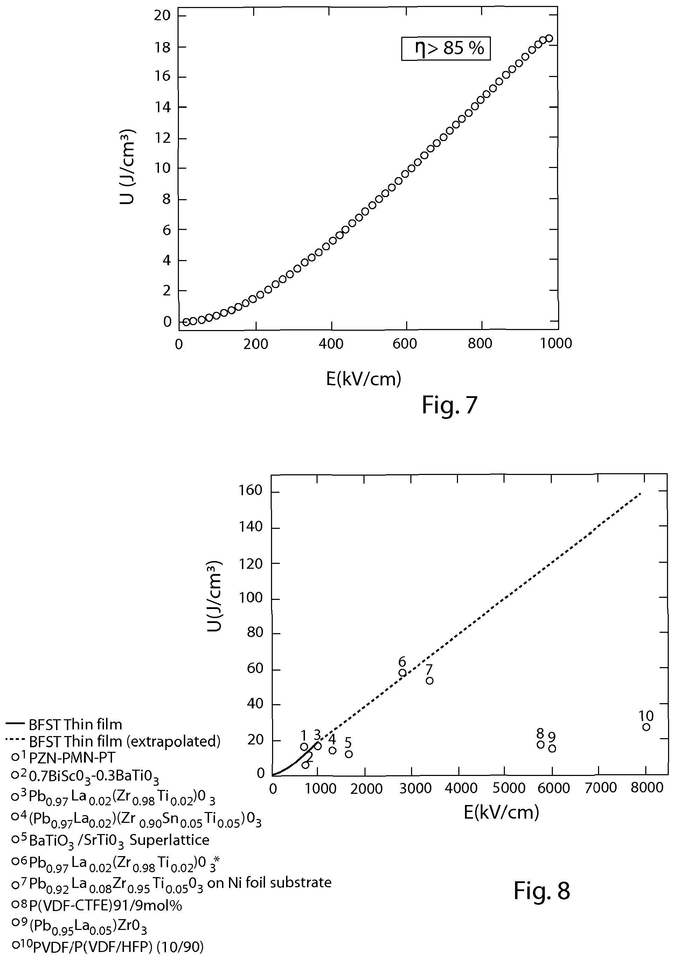

Figure 7 presents the recoverable energy density *U* calculated from the integration of the quadrant of the *P-E* loop associated with the discharge process (*E*>0 and decreasing from its maximum). At E= 972 kV/cm, BFST thin films can release as much as 18.6 J/cm$^3$ (∼ 0.72 Wh/kg) with an efficiency $\eta$ above 85%. It is expected that a much higher energy density can be achieved in the BFST thin films at higher electric fields.

A linear extrapolation of energy density up to 8000 kV/cm suggests the possibility of a recoverable energy density up to 160 J/cm$^3$ (∼6.2 Wh/kg), as seen in Figure 8. We believe that these values can be achieved by improving the quality of the film and its electrical contacts, which would act to enhance the material's dielectric breakdown strength.

Combined with the characteristic recoverable energy density and efficiency, other parameters play an important role in the performance of a capacitor, such as the voltage rating, operating temperature, cost and environmental impact. To benchmark the capability of BFST thin films for use in energy storage devices, we plot in Figure 8 the energy density measured (and extrapolated) in BFST thin film with a number of promising films previously reported. From this representation, we can elaborate that BFST thin films are characterized by similar energy density to these materials, and presents an environmentally friendly (lead-free), inexpensive (compared to scandium based materials for example, which is an expensive element) and thermally and mechanically stable (compared with polymers) solution for conventional capacitors.

Although the energy density, *U*, was not measured at higher temperatures, due to increased dielectric loss and leakage, the modest temperature dependence of permittivity (Figure 5), suggests that this material can recover high energy density up to 200 °C. Also, the sequence of two relaxation mechanisms up to 400 °C, suggests the possibility for the use of this high energy density capacitor at temperatures well above 200 °C.

The high operating voltage extrapolated values of energy density are within the characteristic values for supercapacitors (0.04 to 30 Wh/kg). This indicates the commercially interesting possibility of replacing supercapacitors by ceramic-based capacitors in applications that require high power density whilst maintain high energy density.

Example 2

Bismuth ferrite was doped with lanthanum, which also has very low remnant polarisation and low leakage. The combination of these two materials was proposed so as to provide a material more suitable for high energy density storage.

The proportions of bismuth, iron and lanthanum are advantageously within the following parameters:

$$z(Bi_xLa_{1-x})-(1-z)Fe$$

with $0.3<x<0.8$ and $0.2<z<0.8$

Example 3

Bismuth ferrite was doped with samarium, which also has very low remnant polarisation and low leakage. The combination of these two materials was proposed so as to provide a material more suitable for high energy density storage.
The proportions of bismuth, iron and samarium are advantageously within the following parameters:

$$z(Bi_xSm_{1-x})-(1-z)Fe \text{ with } 0.4<x<0.9 \text{ and } 0.2<z<0.8$$

Other embodiments will be apparent to the skilled person having regard for the teachings herein and the claims which follow.

**Claims**

1. A capacitor including first and second conductive plates separated by a dielectric spacer, the dielectric spacer being formed of a dielectric material including a composition of bismuth ferrite and an additive which increases the difference between the saturation polarisation and the remnant polarisation of bismuth ferrite, **characterised in that** said additive includes strontium and titanium.

2. A capacitor according to claim 1, wherein the dielectric material is the oxide of: $z(Bi_xSr_{1-x})-(1-z)(Fe_yTi_{1-y})$ with $0.1<x,y<0.8$ and $0.2<z<0.8$.

3. A capacitor according to claim 1 or 2, wherein the additive induces a small or minimal remnant polarisation.

4. A capacitor according to any preceding claim, wherein the additive induces low charge leakage.

5. A capacitor according to any preceding claim, wherein the composition is in the form of a solid solution ceramic.

6. A capacitor according to any preceding claim, wherein the composition is oxidised.

7. A capacitor according to any preceding claim, wherein the dielectric material is in a homogeneous layer.

8. A capacitor according to any preceding claim, wherein the capacitor is a multi-layered capacitor.

9. Use of a composition of bismuth ferrite and an additive which increases the difference between the saturation polarisation and the remnant polarisation of bismuth ferrite as a dielectric material for a capacitor, **characterised in that** said additive includes strontium and titanium.

10. A use according to claim 9, wherein the additive induces a small or minimal remnant polarisation.

11. A use according to claim 9 or 10, wherein the additive induces low charge leakage.

12. A use according to any of claims 9 to 11, wherein the composition is in the form of a solid solution ceramic.

13. A use according to any of claims 9 to 12, wherein the composition is oxidised.

14. A use according to any of claims 9 to 13, wherein the material is the oxide of: $z(Bi_xSr_{1-x})-(1-z)(Fe_yTi_{1-y})$ with $0.1<x,y<0.8$ and $0.2<z<0.8$.

15. A dielectric material for a capacitor including a composition of bismuth ferrite and an additive which increases the difference between the saturation polarisation and the remnant polarisation of bismuth ferrite, **characterised in that** said additive includes strontium and titanium.

**16.** A dielectric material according to claim 15, wherein the material is the oxide of: $z(Bi_xSr_{1-x})$-$(1-z)(Fe_yTi_{1-y})$ with 0.1 < x,y< 0.8 and 0.2<z<0.8.

**Patentansprüche**

**1.** Kondensator umfassend erste und zweite leitende Platten, die durch einen dielektrischen Abstandshalter voneinander getrennt sind, wobei der dielektrische Abstandshalter aus einem dielektrischen Material gebildet ist, das eine Zusammensetzung aus Bismut-Ferrit und einem Additiv, das die Differenz zwischen der Sättigungspolarisation und der Restpolarisation von Bismut-Ferrit vergrößert, enthält, **dadurch gekennzeichnet, dass** das Additiv Strontium und Titan enthält.

**2.** Kondensator nach Anspruch 1, wobei das dielektrische Material das Oxid ist von: $z(Bi_xSr_{1-x})$-$(1-z)(Fe_yTi_{1-y})$ mit 0,1<x,y<0,8 und 0,2<z<0,8.

**3.** Kondensator nach einem der Ansprüche 1 oder 2, wobei das Additiv eine geringe oder minimale Restpolarisation induziert.

**4.** Kondensator nach einem der vorstehenden Ansprüche, wobei das Additiv einen geringen Ladungsverlust induziert.

**5.** Kondensator nach einem der vorstehenden Ansprüche, wobei die Zusammensetzung in der Form einer Festlösungskeramik ist.

**6.** Kondensator nach einem der vorstehenden Ansprüche, wobei die Zusammensetzung oxidiert ist.

**7.** Kondensator nach einem der vorstehenden Ansprüche, wobei das dielektrische Material in einer homogenen Schicht ist.

**8.** Kondensator nach einem der vorstehenden Ansprüche, wobei der Kondensator ein Mehrschicht-Kondensator ist.

**9.** Verwendung einer Zusammensetzung von Bismut-Ferrit und einem Additiv, das die die Differenz zwischen der Sättigungspolarisation und der Restpolarisation von Bismut-Ferrit vergrößert, als ein dielektrisches Material für einen Kondensator, **dadurch gekennzeichnet, dass** das Additiv Strontium und Titan einschließt.

**10.** Verwendung nach Anspruch 9, wobei das Additiv eine geringe oder minimale Restpolarisation induziert.

**11.** Verwendung nach Anspruch 9 oder 10, wobei das Additiv einen geringen Ladungsverlust induziert.

**12.** Verwendung nach einem der Ansprüche 9 bis 11, wobei die Zusammensetzung in der Form einer Festlösungskeramik ist.

**13.** Verwendung nach einem der Ansprüche 9 bis 12, wobei die Zusammensetzung oxidiert ist.

**14.** Verwendung gemäß einem der Ansprüche 9 bis 13, wobei das Material das Oxid ist von: $z(Bi_xSr_{1-x})$-$(1-z)(Fe_yTi_{1-y})$ mit 0,1<x,y<0,8 und 0,2<z<0,8.

**15.** Dielektrisches Material für einen Kondensator, das eine Zusammensetzung von Bismut-Ferrit und ein Additiv, das die Differenz zwischen der Sättigungspolarisation und der Restpolarisation von Bismut-Ferrit vergrößert, einschließt, **dadurch gekennzeichnet, dass** das Additiv Strontium und Titan einschließt.

**16.** Dielektrisches Material nach Anspruch 15, wobei das Material das Oxid ist von: $z(Bi_xSr_{1-x})$-$(1-z)(Fe_yTi_{1-y})$ mit 0,1<x,y<0,8 und 0,2<z<0,8.

**Revendications**

**1.** Condensateur comprenant des première et seconde plaques conductrices séparées par un séparateur diélectrique, le séparateur diélectrique étant formé en un matériau diélectrique comprenant une composition de ferrite de bismuth et un additif qui accroît la différence entre la polarisation de saturation et la polarisation rémanente du ferrite de bismuth, **caractérisé par le fait que** ledit additif comprend du strontium et du titane.

2. Condensateur selon la revendication 1, dans lequel le matériau diélectrique est l'oxyde de : $z(Bi_xSr_{1-x})$-$(1-z)(Fe_yTi_{1-y})$ avec $0,1<x,y<0,8$ et $0,2<z<0,8$.

3. Condensateur selon la revendication 1 ou 2, dans lequel l'additif provoque une polarisation rémanente petite ou minimale.

4. Procédé selon une quelconque revendication précédente, dans lequel l'additif provoque une faible fuite de charge.

5. Condensateur selon une quelconque revendication précédente, dans lequel la composition est sous la forme d'une céramique en solution solide.

6. Condensateur selon une quelconque revendication précédente, dans lequel la composition est oxydée.

7. Condensateur selon une quelconque revendication précédente, dans lequel le matériau diélectrique est dans une couche homogène.

8. Condensateur selon une quelconque revendication précédente, dans lequel le condensateur est un condensateur multicouche.

9. Utilisation d'une composition de ferrite de bismuth et d'un additif qui accroît la différence entre la polarisation de saturation et la polarisation rémanente du ferrite de bismuth en tant que matériau diélectrique pour un condensateur, **caractérisée par le fait que** ledit additif comprend du strontium et du titane.

10. Utilisation selon la revendication 9, dans laquelle l'additif provoque une polarisation rémanente petite ou minimale.

11. Utilisation selon la revendication 9 ou 10, dans laquelle l'additif provoque une faible fuite de charge.

12. Utilisation selon l'une quelconque des revendications 9 à 11, dans laquelle la composition est sous la forme d'une céramique en solution solide.

13. Utilisation selon l'une quelconque des revendications 9 à 12, dans laquelle la composition est oxydée.

14. Utilisation selon l'une quelconque des revendications 9 à 13, dans laquelle le matériau est l'oxyde de : $z(Bi_xSr_{1-x})$-$(1-z)(Fe_yTi_{1-y})$ avec $0,1<x,y<0,8$ et $0,2<z<0,8$.

15. Matériau diélectrique pour un condensateur comprenant une composition de ferrite de bismuth et un additif qui accroît la différence entre la polarisation de saturation et la polarisation rémanente du ferrite de bismuth, **caractérisé par le fait que** ledit additif comprend du strontium et du titane.

16. Matériau diélectrique selon la revendication 15, dans lequel le matériau est l'oxyde de : $z(Bi_xSr_{1-x})$-$(1-z)(Fe_yTi_{1-y})$ avec $0,1<x,y<0,8$ et $0,2<z<0,8$.

10

12

16

18

14

Fig. 1

$P_S$  Saturation Polarization (or Maximum Polarization)

$P_R$  Remnant Polarization

## BiFe03

**Fig. 2a**

## SrTi03

**Fig. 2b**

+

## BiFe03-SrTi03

=

Energy Density

**Fig. 2c**

Fig. 3

Fig. 4

Fig. 5

Fig. 6

Fig. 7

— BFST Thin film
---- BFST Thin film (extrapolated)
$o^1$ PZN-PMN-PT
$o^2$ 0.7BiScO$_3$-0.3BaTiO$_3$
$o^3$ Pb$_{0.97}$La$_{0.02}$(Zr$_{0.98}$Ti$_{0.02}$)O$_3$
$o^4$ (Pb$_{0.97}$La$_{0.02}$)(Zr$_{0.90}$Sn$_{0.05}$Ti$_{0.05}$)O$_3$
$o^5$ BaTiO$_3$ /SrTiO$_3$ Superlattice
$o^6$ Pb$_{0.97}$La$_{0.02}$(Zr$_{0.98}$Ti$_{0.02}$)O$_3$*
$o^7$ Pb$_{0.92}$La$_{0.08}$Zr$_{0.95}$Ti$_{0.05}$O$_3$ on Ni foil substrate
$o^8$ P(VDF-CTFE)91/9mol%
$o^9$ (Pb$_{0.95}$La$_{0.05}$)ZrO$_3$
$o^{10}$ PVDF/P(VDF/HFP) (10/90)

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007029593 A1
- JP 2009231482 A
- EP 1591568 A1
- US 20090207551 A
- CN 102199035
- CN 100591642

**Non-patent literature cited in the description**

- **Z. V. GABBASOVA et al.** PHYSICS LETTERS A. NORTH-HOLLAND PUBLISHING CO, 1991, vol. 158, 491-498
- **F. YAN et al.** SCRIPTA MATERIALIA. ELSEVIER, 2010, vol. 63, 780-783
- **P. SINGH et al.** SOLID STATE COMMUNICATIONS. PERGAMON, 2010, vol. 150, 431-434
- **N. MURARI et al.** JOURNAL OF APPLIED PHYSICS. AMERICAN INSTITUTE OF PHYSICS, 2009, vol. 106, 14103-14103, 5
- **Y. YU et al.** IEEE TRANSACTIONS ON MAGNETICS. IEEE SERVICE CENTER, 2011, vol. 47, 3780-3782